# FASCICULE DE BREVET EUROPEEN

(11) **EP 1 504 882 B1**
(45) Date de publication et mention de la délivrance du brevet: **18.07.2007**
(21) Numéro de dépôt: 04017083.9
(22) Date de dépôt: 20.07.2004
(51) Int. Cl.: B29D 30/06

(54) **Méthode de fabrication d'un pneumatique comprenant au moins un insert**
Verfahren zur Herstellung eines mit mindestens einem Einsatz versehenen Luftreifens
Process for manufacturing a tyre which includes at least an insert

(30) Priorité: 04.08.2003 FR 0309621
(43) Date de publication de la demande: 09.02.2005
(73) Titulaire: Société de Technologie Michelin, 63000 Clermont-Ferrand (FR); MICHELIN Recherche et Technique S.A., 1763 Granges-Paccot (CH)
(72) Inventeur: Prost, Pascal, 63200 Riom (FR)
(74) Mandataire: Lasson, Cédric Y. M.

(56) Documents cités:
- EP-A- 0 492 170
- GB-A- 2 265 586
- US-A- 6 113 833
- US-A1- 2003 062 994
- US-B1- 6 582 212

## Description

La présente invention concerne la fabrication de pneumatiques. Plus précisément, elle se rapporte à la fabrication de pneumatiques comportant un ou plusieurs inserts disposés dans le sommet ou dans la bande de roulement desdits pneumatiques.

Il est connu de disposer des inserts dans les pneumatiques. Un tel insert peut être constitué par exemple par un capteur, par un clou pour un pneumatique destiné à rouler sur la glace, par un élément de renfort ou par une élément rapporté constitué d'un matériau élastomérique différent du matériau mis en oeuvre dans la zone considérée du pneumatique.

Par exemple, les documents GB 2265586 - A et US 2003/0062994 - A révèlent des pneumatiques ayant respectivement un indicateur d'usure et un capteur d'accélération incorporés dans la bande de roulement.

La bande de roulement d'un pneumatique est généralement sculptée de manière plus ou moins régulière sur sa circonférence pour donner au pneumatique les caractéristiques fonctionnelles désirées. Il se peut alors que la fonction d'un insert soit influencée par les variations locales du profil, de la sculpture de la bande de roulement dans la zone où cet insert est implanté. Ce peut être le cas, par exemple, d'un capteur de pression ou de température qui, selon qu'il se trouve en regard d'un pain de la sculpture ou au contraire d'une rainure de la sculpture, ne sera pas soumis aux mêmes conditions de pression ou de température.

Une solution connue permettant de positionner précisément un insert par rapport au profil de la bande de roulement consiste à introduire ledit insert après l'opération de moulage de la bande de roulement, c'est à dire généralement après la vulcanisation du pneumatique. Un inconvénient de cette solution est qu'en fonction, en particulier, de la forme, de la taille ou de la fragilité de l'insert, son introduction peut constituer une opération délicate, voire impossible. De plus, la liaison avec les matériaux du pneumatique est difficile à assurer après la vulcanisation. En outre, cet ajout peut avoir des effets sensibles sur l'uniformité du pneumatique.

L'objectif de l'invention est de pallier au moins certains des inconvénients précités en permettant de fabriquer de manière simple et reproductible des pneumatiques comportant un ou plusieurs inserts disposé(s) précisément par rapport à la bande de roulement du pneumatique moulé.

Pour cela, l'invention propose une méthode de fabrication d'un pneumatique, ledit pneumatique comprenant un sommet, ledit sommet comprenant une sculpture moulée, ledit pneumatique comprenant au moins un insert dont la position est déterminée par rapport à la sculpture moulée, ladite méthode consistant à:
- confectionner un pneumatique cru autour d'un noyau;
- positionner ledit au moins un insert au sein du pneumatique cru dans une position déterminée par rapport audit noyau;
- positionner ledit noyau portant ledit pneumatique cru et ledit au moins un insert dans un moule extérieur selon un azimut déterminé;
- mouler ledit pneumatique.

L'insert peut être positionné au sein du pneumatique cru au cours de sa confection ou alternativement après sa confection.

L'invention concerne aussi un noyau pour cette méthode, ce noyau comportant un premier index apte à coopérer avec un premier index complémentaire d'un organe moteur du noyau lors de l'assemblage du pneumatique cru et comportant un deuxième index apte à coopérer lors du moulage avec un deuxième index complémentaire lié au moule extérieur. De préférence, le noyau est tel que le premier et le deuxième index constitue un moyen unique.

L' invention concerne aussi un pneumatique dont le sommet comprend au moins un insert, le pneumatique étant obtenu par la méthode de l'invention.

D'autres avantages de l'invention seront également déduits de la description des figures suivantes:
La figure 1 est une vue schématique en coupe d'un pneumatique comportant un insert.
La figure 2 est une vue de détail de la partie du pneumatique contenue dans le cercle B de la figure 1.
La figure 3 est une vue schématique montrant le principe de la confection selon la méthode de l'invention.
La figure 4 est une vue schématique montrant le principe du moulage selon la méthode de l'invention.
La figure 5 est une vue de détail d'un pneumatique comportant des inserts sous la forme de clous.
La figure 6 est une vue de détail d'un pneumatique comportant un insert sous la forme d'un capteur.

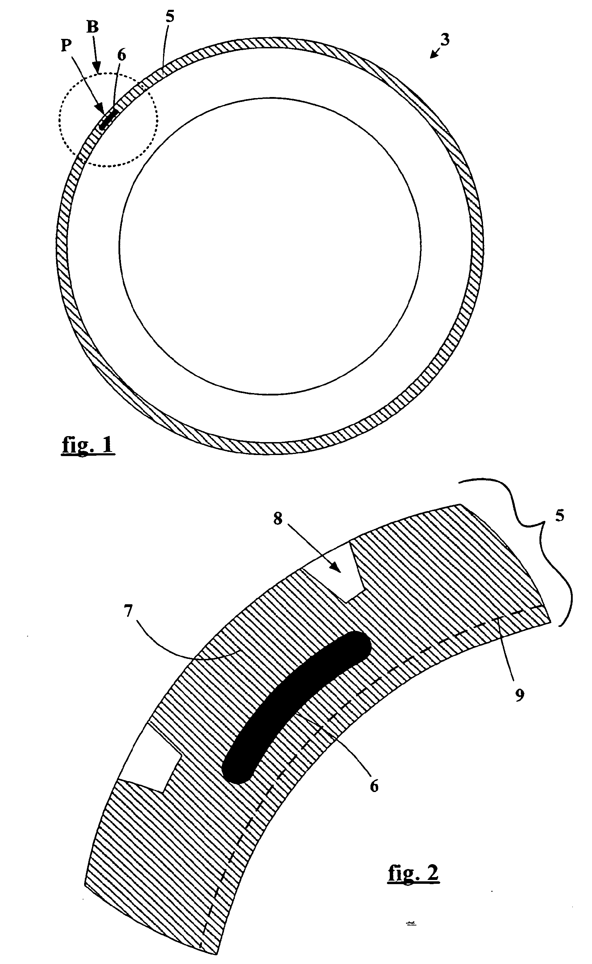

Sur la figure 1, on a représenté un pneumatique 3. Le pneumatique comporte une partie radialement extérieure (5), généralement appelée "sommet". Le sommet 5 comprend principalement la bande de roulement et des renforts de structure. A l'intérieur du sommet de ce pneumatique on a disposé un insert 6 dans une position donnée (P) par rapport au sommet 5.

La figure 2 est une vue plus détaillée mais tout aussi schématique de la zone délimitée par le cercle B sur la figure 1. On y voit le sommet 5 dont la bande de roulement comporte des reliefs positifs 7 (que l'on désigne généralement par des termes comme "pains de sculpture", "blocs" ou "crampons") et des reliefs négatifs 8 (que l'on désigne généralement par des termes comme "rainures", "sillons" ou "creux"). On a représenté par un trait pointillé la structure renforçante 9 (renforts de carcasse, de sommet ou de protection qui peuvent être radiaux, biais ou circonférentiels). L'insert 6 est par exemple un capteur destiné à mesurer la température dans la bande de roulement. On comprend bien que la fonction de l'insert 6 est influencée par la proximité plus ou moins grande des reliefs (7, 8), c'est à dire par la position effective de l'insert dans le pneumatique moulé. Un aspect important de l'invention concerne le positionnement reproductible de l'insert lors de la fabrication en série de tels pneumatiques.

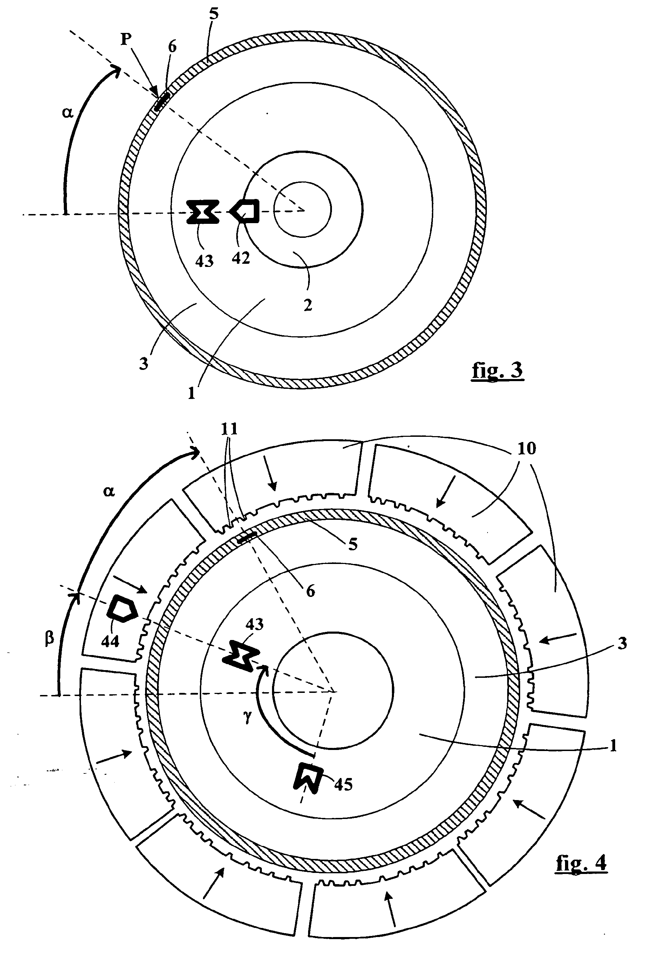

La figure 3 montre le pneumatique des figures précédentes au cours de sa fabrication selon la méthode de l'invention. Le pneumatique cru est confectionné sur un noyau rotatif (1) par enroulement de matériaux de grande longueur et/ou dépôt successif (s) d'éléments de longueur réduite. Le noyau 1 est entraîné par un organe moteur tel qu'une broche ou un moyeu (2). La position du noyau 1 par rapport au moyeu 2 est fixée par des premiers moyens d'indexation (symbolisés ici par des premiers index 42 et 43 de formes complémentaires en regard l'une de l'autre). La position angulaire du noyau lors de sa rotation peut donc être contrôlée en relation avec la commande des différents outils de pose. Il existe de nombreux moyens d'indexation connus comme par exemple un système de rainure et clavette ou un emmanchement comportant un plat ou toute forme d'assemblage ne permettant qu'une seule position angulaire relative. La position angulaire de la broche ou moyeu 2 est contrôlée directement ou indirectement de manière connue en soi par exemple grâce à un codeur incrémental.

Ainsi lorsque l'insert 6 est mis en place au cours du procédé de confection, sa position (P) par rapport au noyau 1 est reproductible. Cette position P peut se décomposer en trois éléments que nous allons maintenant détailler:
- La position radiale de l'insert (dans le sens de l'épaisseur de la bande de roulement) est donnée par le procédé de confection, par exemple en fonction de l'épaisseur des constituants déposés avant que l'insert ne soit lui-même déposé,
- La position transversale de l'insert (dans le sens axiale du pneumatique) est également donnée par le procédé de confection et en particulier par la position axiale de l'outil de pose du ou des insert(s),
- Enfin, la position circonférentielle de l'insert (par exemple l'azimut α) par rapport au noyau est contrôlée selon l'invention par l'intermédiaire d'un système d'indexation, par exemple tel que le système d'indexation décrit plus haut.

Lorsque l'assemblage du pneumatique cru est terminé, c'est à dire que tous ses éléments constitutifs (y compris le ou les inserts) sont en place sur le noyau, cet ensemble (noyau + pneumatique cru) est placé dans un moule extérieur qui donne sa forme finale au pneumatique est particulièrement à sa bande de roulement.

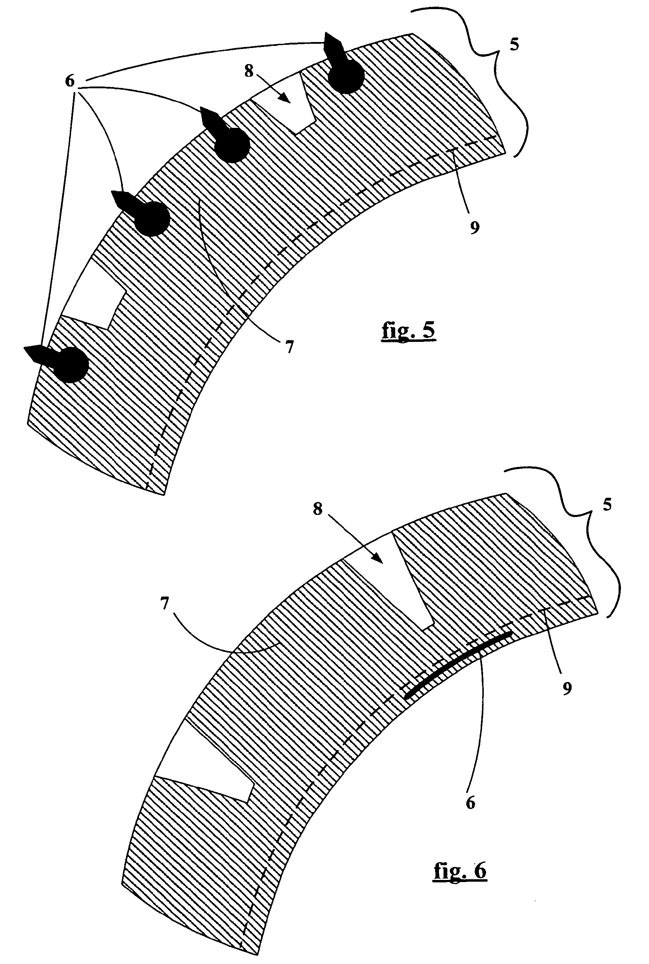

On a représenté à la figure 4 l'étape du procédé de fabrication durant laquelle le pneumatique cru assemblé sur son noyau est placé dans un moule extérieur (symbolisé ici par des secteurs de moulage 10). Les secteurs 10 comportent des parties en saillie (11) destinées à former des reliefs négatifs à la surface du pneumatique. Afin que la position de l'insert 6 par rapport aux reliefs de la bande de roulement moulée soit reproductible d'un pneumatique à l'autre, le noyau portant le pneumatique cru est positionné de manière reproductible par rapport au moule extérieur, c'est à dire ici par rapport aux secteurs (10). Ceci peut être fait grâce à des deuxièmes moyens d'indexation comparables aux premiers moyens d'indexation décrits plus haut pour la confection. Les deuxièmes moyens d'indexation comprennent un deuxième index lié au noyau et un deuxième index complémentaire lié au moule extérieur. On peut bien sûr utiliser des deuxièmes index (44, 45) indépendants des premiers index (42, 43). On peut également utiliser le premier index (43) lié au noyau, ledit premier index coopérant cette fois avec le deuxième index complémentaire (44) lié au moule pourvu que le positionnement angulaire du pneumatique dans le moule soit reproductible au cours des cycles de fabrication. En effet, on comprend bien sur cette figure que n'importe quel point du noyau est fixe relativement à la position P de l'insert 6. On peut donc associer un point quelconque (mais unique) du noyau à un point quelconque (mais unique) du moule extérieur afin que la position angulaire de l'insert dans le moule soit reproduite d'un cycle de fabrication à l'autre. Si l'on prend l'exemple décrit à la figure 4 où l'on a utilisé comme deuxièmes moyens d'indexation les index 44 et 43, l'insert 6 sera à chaque cycle de fabrication, c'est à dire dans chaque pneumatique fabriqué, positionné vis à vis du moule (considéré fixe) à l'azimut α + β par rapport à l'horizontale. Au contraire, si l'indexation lors du moulage utilise comme deuxièmes moyens d'indexation l'association des index 44 et 45, l'insert 6 sera à chaque cycle de fabrication positionné vis à vis du moule à l'azimut α + β + γ par rapport à l'horizontale puisque l'index 45 est décalé par rapport à l'index 43 d'un angle γ.

Les deuxièmes moyens d'indexation peuvent également opérer au niveau des outils (non représentés) qui sont utilisés pour manipuler le noyau après l'étape d'assemblage du pneumatique cru. En effet, un moyeu identique ou similaire au moyeu 2 de la figure 3 peut servir à transporter et/ou positionner angulairement le noyau au sein du moule. La deuxième indexation a lieu dans ce cas par le centre et non plus par la périphérie du noyau comme cela est représenté à la figure 4.

Le positionnement reproductible peut être également obtenu de la manière suivante: le noyau portant le pneumatique cru étant positionné dans une même position angulaire à la fin de chaque cycle de confection, on transporte le noyau et on le place dans le moule en évitant toute rotation (ou en autorisant une rotation d'un angle constant). Ceci peut être mis en oeuvre de manière simple, par exemple par une translation sur des rails ou par une rotation par manège du poste de confection au poste de moulage.

Lorsque la sculpture du pneumatique (ou la partie de sculpture visée) comporte un motif qui se répète deux ou plusieurs fois le long de la circonférence, c'est à dire que l'insert peut prendre plusieurs positions pour un effet identique, on peut naturellement utiliser des moyens d'indexation comportant un nombre correspondant de positions possibles (ou un sous-multiple de ce nombre).

Si au lieu de placer un seul insert comme décrit sur les figures on désire placer deux ou plusieurs inserts, la méthode décrite s'applique sans autre modification que celles nécessaires pour mettre en place lesdits inserts dans le pneumatique cru. Par exemple, on peut mettre en oeuvre la méthode de l'invention pour fabriquer des pneumatiques cloutés, c'est à dire des pneumatiques dont la bande de roulement comporte de nombreux inserts métalliques proéminent destinés à améliorer l'accroche sur sol gelé. C'est l'objet de la figure 5. On y a représenté le sommet 5 d'un pneumatique équipés d'inserts 6 sous la forme de clous à glace disposés sur les pains 7 de sculpture de la bande de roulement selon un motif déterminé. Le moule (non représenté) correspondant comporte des évidements destinés à accommoder les pointes des clous lors du moulage finale.

L'insert peut être déposé entre les différentes couches des matériaux au cours de l'assemblage du pneumatique mais il peut également être introduit en fin de confection dans la gomme crue avant l'opération de moulage. C'est à dire que l'insert peut être mise en place au sein du pneumatique cru au cours d'une opération subséquente mais indépendante de la confection du pneumatique proprement dit.

Au contraire, l'insert 6 peut être positionné au tout début de la confection, sous les renforts (9) de carcasse ou dans la gomme intérieure d'étanchéité. C'est l'objet de la figure 6 qui montre un insert (6) sous la forme par exemple d'un capteur de pression ou de flexion que l'on dispose de manière reproductible en regard d'une rainure 8 de la bande de roulement.

Le noyau (1) peut prendre différentes formes, il peut être rigide, par exemple selon l'enseignement du document EP0242840, ou plus ou moins déformable (gonflable) selon les documents FR2005116 ou EP822047, pourvu qu'il permette à la fois la confection et le moulage.

La pose de l'insert dans le pneumatique cru peut être faite de diverse façons selon la nature, la forme et le nombre des inserts. En particulier, l'insert peut être déposé par une opération spécifique ou au contraire incorporé avant sa pose dans un complexe de dimension plus importante comme une bande de gomme.

On a pu constater que la méthode de l'invention permet une grande constance dans le positionnement final des inserts au sein des pneumatiques finis. La méthode de l'invention peut permettre d'obtenir une dispersion inférieure ou égale à 1 mm sur la circonférence d'un pneumatique tourisme ou moto.

D'une façon générale, le terme "pneumatique" employé dans le présent mémoire couvre naturellement tout type de bandage élastique, pneumatique ou non pneumatique, l'invention concernant essentiellement le moulage de ce "pneumatique" et non son fonctionnement.

## Revendications

1. Méthode de fabrication d'un pneumatique (3), ledit pneumatique comprenant un sommet (5), ledit sommet comprenant une sculpture moulée (7,8), ledit pneumatique comprenant au moins un insert (6) dont la position (P) est déterminée par rapport à la sculpture moulée, ladite méthode consistant à:
• confectionner un pneumatique cru autour d'un noyau (1);
• positionner ledit au moins un insert (6) au sein du pneumatique cru dans une position (P, α) déterminée par rapport audit noyau (1);
• positionner ledit noyau portant ledit pneumatique cru et ledit au moins un insert (6) dans un moule extérieur (10) selon un azimut (β) déterminé;
• mouler ledit pneumatique.

2. Méthode selon la revendication 1 dans laquelle l'insert (6) est positionné au sein du pneumatique cru au cours de sa confection.

3. Méthode selon la revendication 1 dans laquelle l'insert (6) est positionné au sein du pneumatique cru après sa confection.

4. Noyau pour la méthode selon l'une des revendications précédentes comportant un premier index (43) apte à coopérer avec un premier index complémentaire (42) d'un organe moteur (2) du noyau lors de l'assemblage du pneumatique cru et comportant un deuxième index (43; 45) apte à coopérer lors du moulage avec un deuxième index complémentaire (44) lié au moule extérieur (10).

5. Noyau selon la revendication 4 dans lequel le premier et le deuxième index constituent un moyen unique (43).

## Claims

1. A method of manufacturing a tyre (3), said tyre comprising a crown (5), said crown comprising a moulded tread pattern (7,8), said tyre comprising at least one insert (6) whose position (P) is set relative to the moulded tread pattern, said method consisting in:
• building an uncured tyre around a core (1);
• positioning said at least one insert (6) within the uncured tyre in a position (P, α) set relative to said core (1);
• positioning said core bearing said uncured tyre and said at least one insert (6) in an external mould (10) according to a set azimuth (β);
• moulding said tyre.

2. A method according to claim 1, in which the insert (6) is positioned within the uncured tyre during building thereof.

3. A method according to claim 1, in which the insert (6) is positioned within the uncured tyre after building thereof.

4. A core for the method according to one of the preceding claims, comprising a first index (43) capable of cooperating with a first complementary index (42) of a drive member (2) of the core during assembly of the uncured tyre and comprising a second index (43; 45) capable of cooperating during moulding with a second complementary index (44) associated with the external mould (10).

5. A core according to claim 4, in which the first and second indexes constitute a single means (43).

6. A tyre whose crown (5) comprises at least one insert (6) obtained by the method according to one of claims 1 to 3.

## Patentansprüche

1. Verfahren zur Herstellung eines Luftreifens (3), wobei der Luftreifen einen Scheitelbereich (5) aufweis-t, wobei der Scheitelbereich ein geformtes Profil (7, 8) aufweist, wobei der Luftreifen mindestens einen Einsatz (6) aufweist, dessen Position (P) bezüglich des geformten Profils bestimmt wird, wobei das Verfahren darin besteht:
• einen Rohreifen um einen Kern (1) herum zu konfektionieren;
• den mindestens einen Einsatz (6) innerhalb des Rohreifens in einer bestimmten Position (P, α) bezüglich des Kerns (1) zu positionieren;
• den den Rohreifen tragenden Kern und den mindestens einen Einsatz (6) in einem äußeren Formwerkzeug (10) gemäß einem bestimmten Azimut (β) zu positionieren;
• den Luftreifen zu formen.

2. Verfahren nach Anspruch 1, bei dem der Einsatz (6) innerhalb des Rohreifens während dessen Konfektionierung positioniert wird.

3. Verfahren nach Anspruch 1, bei dem der Einsatz (6) innerhalb des Rohreifens nach dessen Konfektionierung positioniert wird.

4. Kern für das Verfahren nach einem der vorhergehenden Ansprüche, der einen ersten Index (43), der in der Lage ist, mit einem ersten komplementären Index (42) eines Antriebsorgans (2) des Kerns beim Zusammenbau des Rohreifens zusammenzuwirken, und einen zweiten Index (43; 45) aufweist, der in der Lage ist, beim Formen mit einem zweiten komplementären Index (44) zusammenzuwirken, der mit dem äußeren Formwerkzeug (10) verbunden ist.

5. Kern nach Anspruch 6, bei dem der erste und der zweite Index ein einziges Mittel (43) bilden.
